# EUROPÄISCHE PATENTSCHRIFT

(11) **EP 0 984 858 B1**
(45) Veröffentlichungstag und Bekanntmachung des Hinweises auf die Patenterteilung: **20.02.2002**
(21) Anmeldenummer: 98929373.3
(22) Anmeldetag: 25.05.1998
(51) Int. Cl.: B32B 35/00, D21H 25/18

(54) **VERFAHREN UND VORRICHTUNG ZUM ABLÖSEN VON KASCHIERUNGEN**
METHOD AND DEVICE FOR REMOVING LAMINATION
PROCEDE ET DISPOSITIF POUR LA SEPARATION DE COUCHES DE RECOUVREMENT

(30) Priorität: 23.05.1997 DE 19721704
(43) Veröffentlichungstag der Anmeldung: 15.03.2000
(73) Patentinhaber: Becker Preservotec GmbH, 71364 Winnenden (DE)
(72) Erfinder: BECKER, Ernst, D-73663 Berglen (DE); WÄCHTER, Wolfgang, D-04849 Glaucha (DE); GAIBLER, Hans-Peter, D-71404 Korb (DE); SCHOMMER, Hans-Peter, D-73614 Miedelsbach (DE)
(74) Vertreter: Alber, Norbert, Dipl.-Ing.
(86) Internationale Anmeldenummer: EP9803070
(87) Internationale Veröffentlichungsnummer: WO9852752

(56) Entgegenhaltungen:
- WO-A-97/16312
- DE-A- 19 510 959
- DE-C- 4 105 368
- GB-A- 1 445 168
- US-A- 2 765 267
- US-A- 4 392 889
- PATENT ABSTRACTS OF JAPAN vol. 017, no. 664 (M-1523), 8. Dezember 1993 & JP 05 220747 A (FUJI PHOTO FILM CO LTD), 31. August 1993
- PATENT ABSTRACTS OF JAPAN vol. 097, no. 007, 31. Juli 1997 & JP 09 059423 A (NITTETSU MINING CO LTD), 4. März 1997

## Beschreibung

Die Erfindung betrifft ein Verfahren bzw eine Vorrichtung zum Ablösen eines dünnen Verbundmaterials von einem Mittelbereich. Der Mittelbereich kann dabei insbesondere ein Papier oder ein aus mehreren Schichten unter Verwendung von Papier bestehendes Material sein.

Dies ist insbesondere bei der Restaurierung von Büchern, Handschriften, Noten, Zeitschriften, Loseblattsammlungen. Akten etc. der Fall. bei denen die ursprünglichen Blätter durch Ergänzen von Fehlstellen und Einbringen einer Kernschicht vervollständigt werden.

Damit entsteht ein Verbundmaterial, welches aus einer mittleren Kernschicht besteht, auf welche beidseits mittels eines Kernklebers die ursprünglichen, entlang der Mittelebene getrennten Hälften des Blattes bzw. Formates bzw. der Buchseite aufgeklebt sind, und auf welchen wiederum auf den Außenseiten mittels eines Kaschierungsklebers jeweils eine Kaschierung aufgebracht ist, die vor allem der Handhabung in den vorangehenden Arbeitsschritten dient.

Als letzte Bearbeitungsstufe muß nun wieder die beidseitige Kaschierung entfernt werden, um die durch die Kernschicht ergänzte ursprüngliche Seite wieder zu erhalten.

Dabei liegt das Verbundmaterial meist in Form von im wesentlichen endlosen, auf großen Wickeltrommeln, sogenannten Bobinen, aufgewickelten Bahnen vor, auf dem sich die einzelnen Buchseiten teilweise mehrfach nebeneinander und hintereinander, zu sogenannten Formaten geordnet, befinden.

Das Ablösen der Kaschierung erfolgt durch ein Lösen des Kaschierungsklebers, meist Gelatine, durch Einwirken von Enzymen bei optimaler Wirktemperatur. Theoretisch wäre das Ablösen auch nur durch langzeitiges Einwirken von Feuchtigkeit bzw. Wasser, und ggf. erhöhter Temperatur möglich, was jedoch so lange Einwirkzeit ergeben würde, daß eine Behandlung im Durchlaufverfahren schwierig ist. Nur die Durchlaufbehandlung ermöglicht jedoch insgesamt niedrige Restaurierungskosten.

Es ist daher die Aufgabe gemäß der vorliegenden Erfindung, ein Verfahren sowie eine Vorrichtung zu seiner Durchführung zu schaffen, mit welcher ein schnelles und kostengünstiges Ablösen der Kaschierungen vom Mittelmaterial möglich ist, wobei das Ablöseergebnis leicht beeinflußbar und steuerbar ist.

Diese Aufgabe wird durch die Merkmale des Anspruchs 1 bzw. des Anspruchs 10 gelöst. Vorteilhafte Ausführungsformen ergeben sich aus den Unteranspruchen.

Dadurch, daß das Ablösen der Kaschierung im Durchlaufverfahren erfolgt. kann einerseits die Effizienz des Verfahrens gesteigert werden und andererseits können Steuerungs- bzw. Regelungsabläufe eingebracht werden, die bei einer Einzelblattbehandlung oder Chargenbehandlung nicht möglich sind, da die Voreinstellungen des vorherigen Stückes bzw, der vorherigen Charge bei der nächsten nicht mehr zur Verfügung stehen.

Um im Durchlauf arbeiten zu können, wird das zu behandelnde Verbundmaterial entweder durch Abwickeln von einer Lieferbobine, auf der das Verbundmaterial aufgewickelt ist, oder direkt aus der vorangehenden Bearbeitungseinheit, zugeführt, die den Kaschierverbund erst erstellt.

Wegen des langen Weges durch die vorliegende Maschine wird bei Chargenbehandlung, also Zuführen des zu behandelnden Verbundmaterials von einer Lieferbobine beim Anlaufen der Chargenbehandlung nicht direkt mit dem Anfang des Verbundmaterials gearbeitet. Vielmehr wird zunächst - in der Regel von Hand - ein flexibles, aus Gummi bestehendes Zugband durch die Maschine eingezogen, bis das vordere Ende die letzten Zugwalzen nahe der Schneidestation erreicht hat. Das hintere Ende des Zugbandes wird mit dem Anfang des Verbundmaterials auf der Lieferbobine verbunden, beispielsweise mit einem kraftschlüssigen Clipverschluß.

Das Zugband ist dabei in der Regel etwas dicker als das zu behandelnde Verbundmaterial, und vor allem ist das Zugband etwas breiter als das Verbundmaterial, In den Umlenkwalzen bzw Preßwalzen sind seitlich Schultern eingearbeitet, deren lichter Abstand nur geringfügig größer bzw, gleich groß wie die Breite des Zugbandes ist. Das Zugband ist daher formschlüssig in Querrichtung durch diese Schultern - die wenigstens bei einigen der Walzen bzw. Rollen vorhanden sind, zwangsgeführt. Dadurch ist ein gerades Einlegen des Zugbandes bereits vorgegeben, und auch das daran angeschlossene Verbundmaterial ist dadurch bereits grob ausgerichtet. Die Feinausrichtung wird durch zusätzliche Steuerungsmittel bewirkt, die später beschrieben werden. jedoch soll in der Regel das Verbundmaterial die weiter außen liegenden Anlaufschultern in den Walzen bzw. Rollen für das Zugband nie erreichen.

Nach Anlauf der Maschine wird das Zugband vom Anfang des Verbundmaterials entfernt und - wenn die Lieferbobine des Verbundmaterials zur Neige geht - wieder an das Ende des Verbundmaterials angeknüpft. Das Verbundmaterial selbst zieht dadurch das Zugband wiederum durch die Maschine, so daß es in dieser Position belassen und als Vorspann für das nächste Verbundmaterial der nächsten Lieferbobine verwendet werden kann Dadurch ist ein Einfädeln von Hand nur ein einziges Mal beim ersten Anlauf der Maschine notwendig

Auch das Wasser aus den Behandlungseinheiten wird vorzugsweise im Kreis geführt. Insbesondere wird es in den Tauchbecken im Gegenstrom zur Laufrichtung des zu behandelnden Verbundmaterials geführt, wobei diese Fließrichtung durch abgestufte Überläufe vom hintersten zum vordersten Tauchbecken hin erzielt wird.

Auch das aus den Tauchbecken heraus verdampfte Wasser wird vorzugsweise kondensiert und dem Wasserkreislauf wieder zugeführt.

Das bahnförmige Verbundmaterial durchläuft nacheinander mehrere Behandlungsschritte, einen Anlösebereich, einen Deaktivierungsbereich und ggf. einen Spülbereich, in denen dem Verbundmaterial jeweils u. a. Feuchtigkeit zugeführt wird. Die Verweilzeiten in diesen einzelnen Bereichen sind vorzugsweise unabhängig voneinander steuerbar, so daß bei schlechtem Ablösen oder frühzeitigen Ablösen der Kaschierung die Einwirkzeit der einzelnen Lösungs- bzw. Behandlungsmittel auf das Verbundmaterial passend eingestellt werden kann.

Am Ende jedes dieser Bereiche findet eine Grobentfeuchtung des Verbundmaterials statt, um die im Verbundmaterial aufgenommene Feuchtigkeit auszudrücken und das Übertreten der einzelnen Mittels in den nachfolgenden Behandlungsbereich größtenteils zu verhindern. Nach dem letzten Behandlungsschritt wird das Verbundmaterial schließlich getrocknet und die Kaschierung vom Mittelmaterial durch Auseinanderführen gelöst.

Zum schonenden Ablösen der Kaschierung von oftmals sehr wertvollen Buchseiten ist es dabei von Bedeutung, die Verweilzeit des Verbundmaterials in den einzelnen Behandlungsbereichen genau einstellen zu können. Eine einfache Möglichkeit ist dabei das Verändern der Durchlaufstrecke des mit gleichmäßiger Geschwindigkeit bewegten bandförmigen Verbundmaterials, womit sich auch die Verweilzeit in den einzelnen Bereichen verändert.

Bei der Behandlung ist insbesondere darauf zu achten, welche physikalischen und chemischen Eigenschaften der verwendete Kaschierungskleber im Vergleich zum Kernkleber hat, mit dessen Hilfe das Mittelmaterial, z. B. die getrennten Hälften einer Buchseite auf dem Kernmaterial aufgeklebt sind. Der Kernkleber darf sich unter den physikalischen oder chemischen Bedingungen, unter welchen sich der Kaschierungskleber lösen läßt. nicht lösen lassen, da ansonsten das Mittelmaterial wieder zerfällt.

Der Behandlungsbereich umfaßt vorzugsweise einen Anlösebereich. einen Deaktivierungsbereich und einen Spülbereich (nicht unter allen Umständen erforderlich), die in dieser Reihenfolge vom bahnförmigen Verbundmaterial durchlaufen werden.

Im Anlösebereich wird das Verbundmaterial vorzugsweise mit einer wäßrigen Lösung beaufschlagt bzw. in eine solche eingetaucht. welche 1 bis 5 ‰. insbesondere 2 ‰ Enzyme enthält, die eine Temperatur von 50 bis 65°C, insbesondere 60°C aufweist.

Im Deaktivierungsbereich wird das Verbundmaterial vorzugsweise auf mindestens 70°C, vorzugsweise 70 bis 80°C erwärmt, indem es mit einer entsprechend temperierten wäßrigen Lösung, insbesondere der wäßrigen Lösung des Anlösebereiches, in Kontakt gebracht wird.

Im Spülbereich wird das Verbundmaterial mit Wasser bzw. Dampf klargespült, welches keine Enzyme enthält.

Eine besonders intensive und daher schnelle Behandlung des Verbundmaterials erfolgt, wenn es flüssigkeitsgefüllte Tauchbereiche durchläuft, wobei z. B. der Anlösebereich bzw. Deaktivierungsbereich bzw. Spülbereich getrennt als flüssigkeitsgefüllte Tauchbereiche ausgebildet sein können.

Eine andere effektive Variante wäre z. B. das Beaufschlagen des Verbundmaterials mittels Dampf in den jeweiligen Behandlungsbereichen, die jeweils mit Dampfaustritts- oder Sprühdüsen ausgestattet sind, alternativ zum Tauchvorgang.

Um lange Verweilzeiten und eine dementsprechend intensive Behandlung des Verbundmaterials in den einzelnen Behandlungsbereichen zu erzielen, kann das bandförmige Verbundmaterial einen einzelnen Bereich mehrfach gewunden. schlaufenförmig, durchlaufen, wobei Umlenkrollen innerhalb der Becken vorgesehen sind, über die das Band verläuft.

Eine ähnlich intensive Behandlung wird erzielt, wenn die einzelnen Bereiche jeweils mehrstufig ausgebildet sind, also innerhalb jedes Bereiches voneinander getrennte Räume vorgesehen sind, in denen das Verbundmaterial behandelt wird. Die Behandlung des Verbundmaterials erfolgt dann zwei- oder mehrfach hintereinander und kann entweder in gleichen Verfahren, z. B. Besprühen, oder in verschiedenen Verfahren, z. B. Bedampfen und Tauchen, durchgeführt werden.

Zwischen den einzelnen Räumen eines Behandlungsbereichs wird das Verbundmaterial vorzugsweise mechanisch grob entfeuchtet, indem es zwischen zwei Walzen durchläuft, die überschüssige Flüssigkeit auspressen. Diese Preßwalzen sind vorzugsweise unmittelbar nach dem Austritt des Bandes, oberhalb eines jeden Raumes angeordnet, so daß die ausgepreßte Flüssigkeit in den jeweiligen Raum zurücklaufen bzw, tropfen kann. Durch das Auspressen des Verbundmaterials vor dem Eintritt in den nachfolgenden Raum wird einerseits das Vermischen der Behandlungsmittel größtenteils verhindert und andererseits eine gleichmäßige Durchfeuchtung des Verbundmaterials erzielt

Nach dem letzten Behandlungsschritt läuft das gesamte Verbundmaterial in eine Trockenstrecke. Die Trocknung des Verbundmaterials kann einstufig z. B. durch Kontakttrocknung erfolgen oder z. B mehrstufig, insbesondere in Vortrocknung und Haupttrocknung aufgegliedert sein. Bei der Vortrocknung kann das Absaugen von Feuchtigkeit aus dem Verbundmaterial mittels eines saugfähigen, trocknen Materials, wie z. B. Vliesmaterial, durchgeführt werden.

Anschließend verläuft das Verbundmaterial weiterhin waagerecht in einen Trocknungskasten, der ein im wesentlichen geschlossenes Gehäuse aufweist, das von trockener Luft durchströmt wird. Die Luft kann ggf vor dem Einströmen in den Trocknungskasten erwärmt werden

Diese Flächen sind vorzugsweise derart geformt und angeordnet, daß eine Krümmung des Verbundmaterials um eine Krümmungsachse quer zur Durchlaufrichtung erfolgt. Die Trockenluft, die den Trocknungskasten durchströmt, nimmt durch das Vorbeiströmen am Verbundmaterial Feuchtigkeit auf und transportiert diese aus dem Trocknungskasten.

Erst nach dem Verlassen des Trocknungskastens verläuft das Verbundmaterial vorzugsweise in eine Abziehstation, in der die Kaschierung vom Mittelmaterial abgelöst wird. Das Auseinanderführen von Kaschierung und Mittelmaterial erfolgt vorzugsweise durch Umlenken der Kaschierung um zwei gegeneinander laufende Ablösewalzen in diametraler Richtung Nachfolgend wird die Kaschierung der Ober- und Unterseite auf separaten Kaschierungsbobinen aufgewickelt, die sich oberhalb und unterhalb der Verbundbahn befinden.

Vorzugsweise geschieht das Ablösen der zwei auf den Außenseiten des Mittelmaterials vorhandenen Kaschierungen gleichzeitig, also an der gleichen Stelle des Durchlaufs, indem die Kaschierungen in diametrale Richtungen auseinandergeführt und das Mittelmaterial in Durchlaufrichtung weitergeführt wird.

Nach der Abziehstation verläuft das übrige Mittelmaterial in eine Schneidestation, in der die teilweise mehrfach nebeneinander und hintereinander angeordneten Formate wieder auf ihre ursprüngliche Größe zugeschnitten werden

Zum Zwecke einer genauen Längsausrichtung kann z. B. eine Steuerung bzw Regelung vorgesehen sein, die mit optischen Mitteln überprüft, ob z. B. ein Format unter der Schneide liegt oder nicht und dementsprechend die Transportwalzen und das Messer steuert.

Die sicherste Methode des Zuschneidens ist ein Verfahren, in dem nur Bögen einer bestimmten Größe von der Mittelmaterialbahn abgeschnitten werden und die einzelnen Seiten des Buches dann von Hand zugeschnitten werden. Bei der Herstellung der Formate werden die Seiten daher nur auf vorher festgelegten Bereichen angeordnet, so daß ein seitlicher Rand frei bleibt, der sicher maschinell geschnitten werden kann

Der Querversatz wird vorzugsweise anhand des Abstandes der Verbundbahn von einer senkrechten Zentralwand erfaßt und bei Bedarf geregelt

Die Bobinen sind ebenso wie alle anderen Baugruppen, die sich über die Breite der Verbundbahn erstrecken, nur einseitig, also frei auskragend an der senkrechten Zentralwand befestigt, die das Maschinengestell bildet Entlang dieser Zentralwand wird die Verbundbahn horizontal entlanggeführt, behandelt, getrocknet, und schließlich wieder geschnitten. Dabei wird der Geradeauslauf der Bahn durch ein oder mehrere Sensoren überwacht, die die Seitenkante der Verbundbahn abtasten und den Abstand der Kante zur Zentralwand messen

Im Verlauf der Strecke sind - insbesondere am Anfang und Ende - Umlenkwalzen vorhanden, die um eine Schwenkachse, welche senkrecht zur Rotationsachse der Umlenkachse und etwa in Richtung der Bandlaufrichtung liegt, unabhängig voneinander geringfügig verschwenkbar sind Dadurch kann die Laufrichtung, also der Geradeauslauf, des darüberlaufenden Bandes eingestellt werden, wobei der Umschlingungswinkel wenigstens 90° betragen sollte.

Um eine genaue Querausrichtung zu erhalten, können die Walzen der Abzieh- und Schneidestation ebenfalls an ihrer Rotationsachse regelbar sein. Darüber hinaus ist die Lieferbobine, auf der das Verbundmaterial aufgewickelt ist, in ihrem Abstand zur Zentralwand veränderbar und mittels eines Signals der Abstandssensoren regelbar.

Die erfindungsgemäße Vorrichtung zum Ablösen der Kaschierung eines dünnen Verbundmaterials von einem Mittelmaterial umfaßt vorzugsweise einen Tauchbereich, bestehend aus nacheinander geschalteten Tauchbecken, eine Haupttrocknung mit beheizten, gekrümmten Heizflächen und eine Abziehstation mit einem gegeneinander wirkenden Paar von Ablösewalzen, an denen die Kaschierung vom Mittelmaterial getrennt und auseinandergeführt wird. Diese Arbeitsstationen sind vorzugsweise direkt nacheinander angeordnet

Ggf. ist vor der Haupttrocknung noch eine Vortrocknung mit einem Preßwalzenpaar, welche das Verbundmaterial mit einem saugfähigen Material unter Druck in Verbindung bringt, vorgeschaltet

Vor dem Tauchbereich ist eine Lieferbobine vorgesehen, auf der das Verbundmaterial aufgewickelt ist.

Die Verweildauer des Verbundmaterials in den einzelnen Becken des Tauchbereichs kann durch das Verlegen von Tauchwalzen eingestellt werden, die innerhalb der Tauchbecken vertikal gesenkt und gehoben werden können. Die Tauchwalzen werden vertikal entlang von Taucharmen geführt und sind in die Tauchbecken hinein verlagerbar Das bahnförmige Verbundmaterial verläuft über die Unterseite der Tauchwalzen sowie über die Oberseite von Umlenkwalzen, die oberhalb und außerhalb der Tauchbecken angeordnet sind.

Jeder Behandlungsbereich besteht vorzugsweise aus mehreren hintereinandergeschalteten, insbesondere je zwei Tauchbecken, in die jeweils eine Tauchwalze einfahrbar ist. Die Eintauchtiefe jeder Tauchwalze entlang des Taucharmes ist für jedes Tauchbecken separat veränderbar.

Der Tauchbereich ist im wesentlichen dicht von einem Tauchgehäuse umschlossen, um das Auslaufen von Lösemitteln u. dgl. zu verhindern Das Tauchgehäuse weist jedoch eine Tauchbereichsabsaugung zum Absaugen der im Tauchbereich entstandenen Brüden auf, die im oberen Bereich angeordnet ist.

Die einzelnen Tauchbecken sind des weiteren insbesondere elektrisch beheizbar und separat in ihrer Temperatur regelbar. Oberhalb jedes Tauchbeckens ist eine Umlenkwalze und eine mit dieser zusammenwirkende Preßwalze zum Auspressen von Flüssigkeit aus dem dazwischen durchlaufenden Verbundmaterial vorgesehen. Die Walzen sind so angeordnet, daß die herausgepreßte Flussigkeit in das jeweilige Tauchbecken zurückfließt.

Eine besonders intensive und effiziente Behandlung des Verbundmaterials wird erreicht, wenn innerhalb der Tauchbecken Dampfaustrittsdusen angeordnet sind, die gegen das Verbundmaterial gerichtet sind Die Dampfaustrittsdüsen können z. B. in den Taucharmen für die Tauchwalzen angeordnet sein

Nach dem letzten Behandlungsschritt verläuft das Verbundband in eine Trockenstrecke. Wenn notwendig, wird an einer Vortrocknungsstation das Verbundmaterial zwischen einem Preßwalzenpaar hindurchgeführt. wobei über jede der Preßwalzen ein saugfähiges Material, wie z B ein saugfähiges Vliesband, geführt ist.

Die Preßwalzen müssen nicht notwendigerweise angetrieben sein Das saugfähige Material wird dann durch den Vorschub der Verbundbahn zwischen den Walzen mitgenommen. Bei größerem Anpreßdruck der Walzen ist es jedoch vorteilhaft, wenigstens eine Preßwalze anzutreiben, um ein vorzeitiges Ablösen der Kaschierung zu verhindern.
An einer von den Preßwalzen entfernten Stelle wird die in den endlos umlaufenden Vliesbändern enthaltene Feuchtigkeit vorzugsweise von einer Feuchteabsaugung beaufschlagt bzw. die Feuchtigkeit ausgeblasen.

Die Haupttrocknung bzw. die nachfolgende Haupttrocknung wird in einem im wesentlichen geschlossenen Haupttrocknungskasten durchgeführt, der von Trocknungsluft durchströmt wird. Die trockene Luft, insbesondere vorgetrocknete Luft, gelangt über einen Haupttrocknungseinlaß in den Trocknungskasten und verläßt diesen nach dem Entlangstreichen an der Verbundbahn und Aufnahme von Feuchtigkeit über eine Haupttrocknungsabsaugung.

Die Haupttrocknungsstation umfaßt in Durchlaufrichtung mehrere nacheinander angeordnete gekrümmte Heizflächen, deren Temperatur separat steuerbar ist. Die gekrümmten Heizflächen sind gegensätzlich zueinander angeordnet, mit nach außen zeigenden Scheitelpunkten. so daß das über ihre jeweiligen Außenflächen verlaufende Verbundmaterial in einer wellenförmigen Bahn geführt wird.

Vor der ersten Heizfläche und nach der letzten Heizfläche, d. h. am Anfang und am Ende des Haupttrocknungskastens ist jeweils eine Umlenkwalze angeordnet.

Vorzugsweise etwa in der Mitte der Durchlauflänge ist innerhalb des Haupttrocknungskasten wenigstens ein Paar Antriebswalzen angeordnet, zwischen denen das Verbundmaterial durchgeführt ist. Die Heizflächen sind insbesondere um Krümmungsachsen gekrummt, die quer zur Durchlaufrichtung liegen und sind insbesondere abwechselnd oberhalb und unterhalb der Hauptdurchlaufrichtung angeordnet, so daß das Verbundmaterial in einer wellenförmigen Bahn geführt wird

Die Verbundbahn verläßt den Haupttrocknungskasten vorzugsweise in horizontaler Richtung und verläuft danach vorzugsweise in die Führungswalzen der Abziehstation. Die Führungswalzen führen die Verbundbahn vorzugsweise genau waagerecht horizontal zwischen die Ablösewalzen, insbesondere derart, daß der Einführwinkel der Bahn bezüglich der einen Walze gleich dem Einführwinkel der Bahn bezüglich der anderen Walze ist. Die Ablösewalzen weisen einen Durchmesser von ca. 80 bis 150 mm. insbesondere von 90 bis 110 mm auf.

Der Abziehstation ist eine Schneidestation zum Schneiden des bahnförmigen Mittelmaterials in einzelne Bögen nachgeschaltet. Zwischen der Ablösestation und der Schneidestation ist ein Schlaufenbildner, bestehend aus einem ersten Paar Schlaufenwalzen und einem zweiten Paar Schlaufenwalzen, angeordnet. die separat angetrieben sind, so daß durch Stoppen des in Durchlaufrichtung stromab liegenden zweiten Paares und weiterein Antreiben des ersten Paares Schlaufenwalzen, zwischen den Paaren eine zunehmende Schlaufe aus Mittelmaterial gebildet wird. Währenddessen steht das Mittelmaterial an der nachfolgenden Schneidestation still und kann dort zu Bögen geschnitten werden.

Der Schneidestation ist ein Transportband für die einzelnen Bögen sowie ein schräg nach unten geneigter Ablagetisch nachgeordnet.

Zur Regelung des Querverlaufs der Verbundbahn ist die Lieferbobine mit ihrer Hülse auf einen Spannkern aufgebracht, der in der Zentralwand einseitig gelagert und insbesondere gegen diese in seiner Axialrichtung vertagerbar ist.

Weiterhin sollte bei der erfindungsgemäßen Vorrichtung auf folgende Details einzeln und/oder in deren Zusammenwirken geachtet werden
- daß vor der Haupttrocknung eine Vortrocknung mit einem Preßwalzenpaar geschieht, welche das Verbundmaterial mit einem saugfähigen Material unter Druck in Verbindung bringt;
- daß vor dem Tauchbereich eine Lieferbobine, auf welcher das Verbundmaterial aufgewickelt ist, angeordnet ist;
- daß jedes Tauchbecken aus mehreren hintereinander geschalteten, insbesondere je zwei, Tauchbecken besteht, und im jeden einzelnen Teilbecken eine Tauchwalze einfahrbar ist;
- daß die Eintauchtiefe jeder Tauchwalze entlang des Taucharmes separat veränderbar ist;
- daß alle Taucharme an einem gemeinsamen Tragrahmen befestigt sind und der Tragrahmen insgesamt so verlagerbar ist. daß alle Tauchwalzen gemeinsam aus ihren Tauchbecken entfernt werden;
- daß der Tauchbereich von einem Tauchgehäuse im wesentlichen dicht umschlossen ist;
- daß am Tauchgehäuse eine Tauchbereichabsaugung zum Absaugen der im Tauchbereich entstehenden Brüden im oberen Bereich angeordnet ist;
- daß die einzelnen Tauchbecken beheizbar, insbesondere elektrisch beheizbar und separat in ihrer Temperatur regelbar sind;
- daß wenigstens an der am Ende jedes Tauchbeckens angeordneten Umlenkwalze eine mit dieser zusammenwirkende Preßwalze zum Auspressen von Flüssigkeit aus dem dazwischen durchlaufenden Verbundmaterial so angeordnet ist, daß die herausgepreßte Flüssigkeit in das jeweilige Tauchbecken zurückfließt;
- daß in den Tauchbecken gegen das Verbundmaterial gerichtete Dampfaustrittsdüsen angeordnet sind;
- daß Dampfaustrittsdusen in den Taucharmen für die Tauchwalzen angeordnet sind;
- daß wenigstens eine der Preßwalzen angetrieben ist;
- daß die endlosen, umlaufenden Vliesbänder an eine von den Preßwalzen entfernten Stelle zum Entfernen der beinhalteten Feuchtigkeit von einer Feuchteabsaugung beaufschlagt bzw. die Feuchtigkeit ausgebtasen wird;
- daß die Haupttrocknung in einem im wesentlichen geschlossenen Haupttrocknungskasten durchgeführt wird, welcher über eine Haupttrocknungsabsaugung für die feuchtigkeitsbeladene Luft und einem Haupttrocknungseinlaß zum Einbringen von trockener Luft, insbesondere getrockneter Luft, verfügt;
- daß die Haupttrocknung in Durchlaufrichtung nacheinander mehrere gebogene Heizflächen aufweist, die in ihrer Temperatur separat steuerbar sind, und die so zueinander angeordnet sind, daß über ihre jeweiligen Außenflächen das Verbundmaterial geführt wird;
- daß vor der ersten Heizfläche und nach der letzten Heizfläche jeweils eine Umlenkwalze angeordnet ist;
- daß innerhalb des Haupttrocknungskastens, vorzugsweise etwa in der Mitte deren Durchlauflänge, wenigstens ein Paar von Antriebswalzen, zwischen welchen das Verbundmaterial durchgeführt wird, angeordnet ist;
- daß die Heizflächen um Krümmungsachsen gekrümmt sind, die quer zur Durchlaufrichtung und insbesondere abwechselnd oberhalb und unterhalb der Hauptdurchlaufrichtung durch die Haupttrocknung liegen;
- daß die Ablösewalzen einen Durchmesser von 80 bis 150 mm, insbesondere von 90 bis 110 mm aufweisen;
- daß der Abziehstation eine Schneidstation zum Schneiden des bahnförmigen Mittelmaterials in einzelne Bögen nachgeschaltet ist;
- daß zwischen der Ablösestation und der Schneidstation ein Schlaufenbildner. bestehend aus einem ersten Paar von Schlaufenwalzen und einem zweiten Paar von Schlaufenwalzen angeordnet ist, die separat angetrieben sind, so daß durch Stoppen des zweiten Paares von Schlaufenwalzen und weiterem Antreiben des ersten Paares von Schlaufenwalzen dazwischen eine zunehmende Schlaufe aus Mittelmaterial gebildet wird, während die nachfolgende Schneidestation das stillstehende Mittelmatenal schneiden kann;
- daß der Schneidstation ein Transportband für die einzelnen Bögen sowie eine schräg nach unten gerichtete Bogenablage nachgeordnet sind.

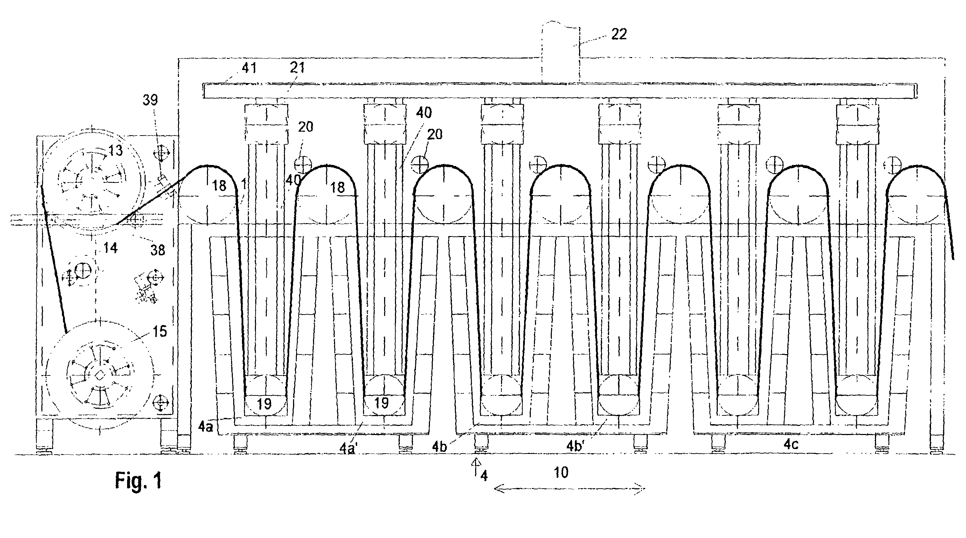

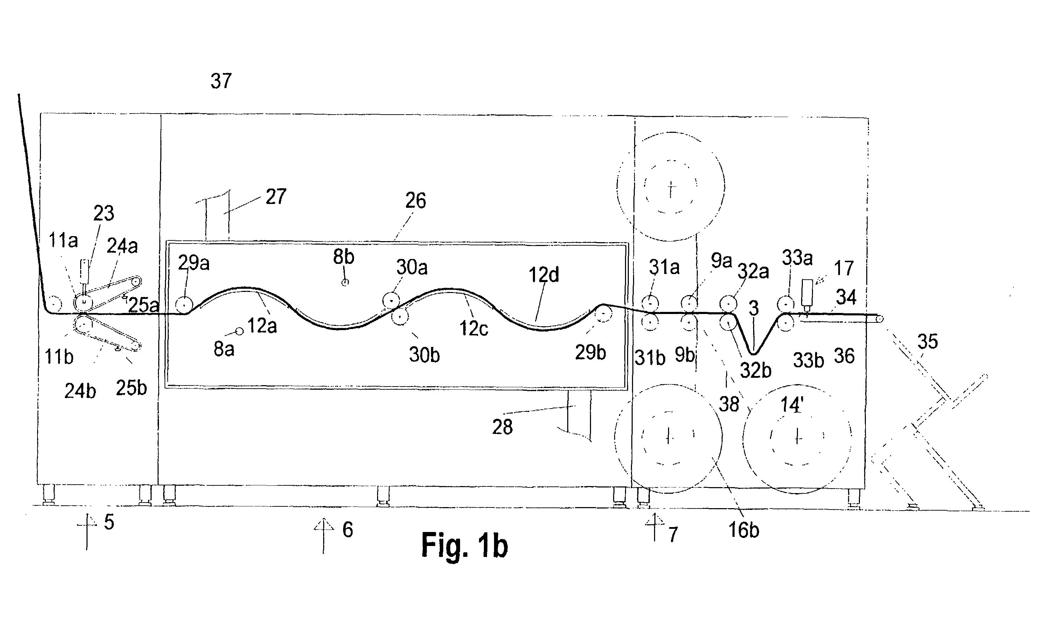

Eine Ausführungsform gemäß der Erfindung ist nachfolgend anhand der Figuren 1a und 1b näher erläutert.

Die Figuren zeigen eine Frontansicht der Maschine, in welcher - in Durchlaufrichtung von links nach rechts - die zu bearbeitende Verbundbahn 1 von einer Lieferbobine 13 abgewickelt und über eine obere Umlenkwalze 18 in einen Tauchbereich 4 geführt wird. Nach dem Tauchbereich 4 ist eine Trockenstrecke mit einer Vortrocknung 5 und einer Haupttrocknung 6 angeordnet, in der das Verbundmaterial 1 getrocknet wird. Das eigentliche Abziehen der Kaschierung 2 vom Mittelmaterial 3 erfolgt dann an einer Abziehstation 7. An einer nachgeordneten Schneidestation 17 wird schließlich das von der Kaschierung 2 befreite Mittelmaterial 3 in Bögen geschnitten und auf einer Bogenablage 35 abgelegt.

Der gesamte Verlauf der Verbundbahn ist dabei in der Frontansicht gut zu sehen, da alle Bobinen, Umlenkwalzen und Preßwalzen nur auf ihrer vom Betrachter abgewandten Rückseite in der senkrecht stehenden Zentralwand 37 einseitig und nach vorne frei auskragend gelagert sind Dadurch ist das Beobachten des Bahnverlaufes durch den Bediener gut möglich, und es können auch Veränderungen, die durch Nachregeln an der Maschine bewirkt werden, jederzeit gut beobachtet werden.

Vor dem Tauchbereich 4 ist zunächst eine Lieferbobine 13 angeordnet, auf welcher das Verbundmaterial 1 aufgewickelt ist. Von der Lieferbobine 13 wird das Verbundmaterial 1 abgewickelt und die mitgewickelte Zwischenlage auf eine darunter angeordnete Zwischenlagenbobine 15 zugewickelt.

Die Verbundbahn 1 wird von der Lieferbobine 13, die durch eine Kupplung permanent gebremst ist, abgezogen, und verläuft über eine obere Umlenkwalze 18 in das erste Becken 4a des Anlösebereichs. Der Bearbeitungsbereich 4 ist in einen Anlösebereich, einen Deaktivierungsbereich und einen Spülbereich unterteilt, die als getrennte, flüssigkeitsgefüllte Tauchbereiche ausgebildet sind. Der Anlösebereich, Deaktivierungsbereich bzw. Spülbereich ist jeweils wiederum in zwei voneinander getrennte Tauchbecken 4a. 4a', 4b, 4b', 4c, 4c' unterteilt. In jedem Tauchbecken 4a, 4a', 4b, 4b', 4c, 4c' sind Tauchwalzen 19 zum Eintauchen des Verbundmaterials 1 angeordnet, die entlang von Taucharmen 40 in die Tauchbecken 4a, 4b, 4c vertikal absenkbar sind Das bahnförmige Verbundmaterial 1 verläuft über die Unterseite der Tauchwalzen 19 sowie über die Oberseite der Umlenkwalzen 18, die oberhalb und außerhalb der Tauchbecken 4a, 4b, 4c angeordnet sind.

In jedes der Tauchbecken ist eine Tauchwalze 19 einfahrbar, deren Eintauchtiefe entlang des Taucharmes 40 separat veränderbar ist.

Der Tauchbereich 4 ist im wesentlichen dicht von einem Tauchgehäuse 41 umschlossen, an dem eine Tauchbereichsabsaugung 22 zum Absaugen der im Tauchbereich entstehenden Brüden im oberen Bereich angeordnet ist.

Die einzelnen Tauchbecken 4a, 4b, 4c, 4a', 4b', 4c' sind z. B elektrisch beheizbar und in ihrer Temperatur separat regelbar. Oberhalb zwischen den Tauchbecken sind jeweils eine Umlenkwalze 18 und eine mit dieser zusammenwirkende Preßwalze 20 angeordnet. Die Preßwalze 20 preßt die Flüssigkeit aus dem dazwischen durchlaufenden Verbundmaterial 1, so daß die herausgepreßte Flüssigkeit in das jeweilige Tauchbecken 4a, 4b, 4c zurückfließt. Dadurch wird ein zu schnelles Vermischen der einzelnen Flüssigkeiten miteinander verhindert.

In den Tauchbecken 4a, 4b, 4c sind jeweils (nicht gezeigte) Dampfaustrittsdüsen angeordnet die sich an den Taucharmen 40 für die Tauchwalzen 19 befinden.

Im Anlösebereich wird das Verbundmaterial 1 mit einer wäßrigen Lösung, die 2 ‰ Enzyme enthält, bei einer Temperatur von 60°C, in Kontakt gebracht. Im nachfolgenden Deaktivierungsbereich wird das Verbundmaterial 1 in die gleiche wäßrige Lösung des Anlösebereichs bei 80°C eingetaucht Im Spülbereich wird schließlich das Verbundmaterial 1 mit Wasser bzw. Dampf klargespult, das keine Enzyme enthält.

Nach dem letzten Behandlungsschritt, nämlich dem Spülen im Becken 4c', wird die Verbundbahn nochmals zwischen einer Umlenkwalze 18 und einer Preßwalze 20 hindurchgeführt und vorzugsweise waagerecht in Durchlaufrichtung 10 über eine weitere Umlenkrolle zur Vortrocknungsstation 5 geleitet.

Die Vortrocknung 5 arbeitet mit dem Verfahren der Kontakttrocknung und umfaßt ein Preßwaizenpaar 11a, 11b, zwischen dem das Verbundmaterial 1 hindurchgeführt wird, wobei über jede der Preßwalzen 11a, 11b ein saugfähiges Vliesband 24a, 24b geführt ist. Die Preßwalze 11a, wird von einem Motor mit der Geschwindigkeit der Verbundbahn 1 angetrieben.

Dadurch ist sichergestellt, daß zwischen den Anpreßwalzen 11a, 11b und der Kaschierung 2 des Verbundmaterials 1 nicht zuviel Reibung entsteht und sich die Kaschierung 2 nicht frühzeitig vom Verbundmaterial 1 ablöst.

Die endlos umlaufenden Vliesbänder 24a. 24b werden an einer von den Preßwalzen 11a, 11b entfernten Stelle, an der Unterseite der vertikal umlaufenden Vliesbänder 24a, 24b mit einer Feuchteabsaugung 25a, 25b beaufschlagt, wodurch die von den Vliesbändern 24a, 24b aufgenommene Feuchtigkeit größtenteils entfernt wird.

Die oberhalb und unterhalb der waagerecht verlaufenden Verbundbahn 1 angeordneten Vliesbandeinheiten sind schräg aufeinander zu gerichtet, wobei die vertikal übereinander angeordneten Preßwalzen 11a, 11b indirekt über das Verbundmaterial 1 gegeneinander drücken. Die Vliesbandeinheiten sind schwenkbar gelagert, und die obere Preßwalze 11a wird mittels eines Preßstempels 23 indirekt gegen die untere Preßwalze 11b gedruckt.

Nach der Vortrocknung 5 verläuft die Verbundbahn 1 weiterhin waagerecht in einen im wesentlichen geschlossenen Haupttrocknungskasten 26, der eine Haupttrocknungsabsaugung 27 für die feuchtigkeitsbeladene Luft und einen Haupttrocknungseinlaß 28 aufweist, über den insbesondere getrocknete Luft in den Haupttrocknungskasten 26 eindringt.

Im Haupttrocknungskasten sind des weiteren in Durchlaufrichtung 10 nacheinander mehrere gebogene Heizflächen 12a, 12b, 12c angeordnet, die unabhängig voneinander beheizt werden können. Das Verbundmaterial 1 verläuft über die Außenseiten der gebogenen Heizflächen 12a, 12b, 12c, ..., die um Krümmungsachsen 8a, 8b gekrümmt sind, und quer zur Durchlaufrichtung 10 abwechselnd oberhalb und unterhalb der Hauptdurchlaufrichtung der Haupttrocknung 6 liegen, so daß das Verbundmaterial wenigstens in jede Krümmungsrichtung zweimal gebogen wird.

Vor der ersten Heizfläche 12a und nach der letzten Heizfläche 12d ist jeweils eine Umlenkwalze 29a, 29b angeordnet Etwa in der Mitte des Haupttrocknungskastens 26 ist zwischen den Heizflächen 12b und 12c ein Paar von Antriebswalzen 30a, 30b angeordnet, zwischen denen das Verbundmaterial 1 durchgeführt wird.

Damit die Verbundbahn 1 nicht seitlich von der Durchtaufrichtung 10 abweicht, muß besonders während des Durchlaufs der Bahn durch den Tauchbereich 4 und den Trockenbereich 5 und 6 eine Seitensteuerung vorgenommen werden. Zu diesem Zweck wird der Abstand der Kante der Verbundbahn 1, die näher an der Zentralwand 37 liegt, gemessen, und im Falle einer Abweichung der Winkel der Umlenkwalzen 18 oder der Tauchwalzen 19 zur Zentralwand 37 geringfügig verändert. Der Abstand der Bahnkante zur Zentralwand 37 wird dabei durch Seitenkantenabtaster 39 erfaßt und die entsprechenden Walzen oder Bobinen verstellt.

Wird z. B. im Bereich der Tauchstrecke 4 ein mangelhafter Seitenabstand festgestellt, so wird z. B. der Abstand der Lieferbobine 13, die in axialer Richtung verschiebbar ist, zur Zentralwand 37 geregelt. Außerdem ist der Winkel der Umlenkwalzen 18 und/oder der Tauchwalzen 19 zur Zentralwand geringfügig veränderbar. Dies verändert die Laufrichtung des bahnförmigen Verbundmaterials 1 und stellt somit die Seitensteuerung dar, die durch die Seitenkantenabtastung 39 überwacht wird.

Wird dagegen im Bereich der Trockenstrecke 5, 6 ein mangelhafter Seitenabstand festgestellt, so wird eine der Antriebswalzen 30a, 30b bezüglich einer quer zur Walzenerstreckung laufenden Schwenkachse wenigstens geringfügig verschwenkt, um dadurch den Geradlauf bzw. die Seitenauslenkung der Verbundbahn 1 steuern zu können. Zu diesem Zweck ist die entsprechende Antriebswalze. 30a, 30b in einem Pendellager gelagert, da die Antriebswalze wie alle Aggregate der entsprechenden Vorrichtung - nur einseitig an einer Zentralwand befestigt ist und von dieser frei auskragt.

Zum Zwecke der Seiteneinstellung können auch die nachfolgenden Walzen 9, 31, 32, 33 bezüglich ihres Winkels zur Zentralwand 37 einstellbar sein.

Der Haupttrocknungsstation 6 ist eine Abziehstation 7 und eine Schneidestation 17 zum Schneiden des bahnförmigen Mittelmaterials 3 in einzelne Bögen nachgeschaltet.

in der Abziehstation 7 verläuft das bahnförmige Verbundmaterial 1 zunächst durch Führungswalzen 31a, 31b die das Verbundmaterial 1 ausrichten, so daß es z. B. horizontal zwischen die nachfolgend angeordneten Ablösewalzen 9a, 9b geführt wird.

Die Ablösewalzen 9a, 9b sind relativ dicht hinter den Führungswalzen 31a, 31b angeordnet, so daß das Verbundmateriais 1 gerade geführt wird, also keine Biegung im Verlauf zwischen den Walzenpaaren auftritt und somit die Kaschierungen 2a, 2b an der Ober- und Unterseite des Verbundmaterials 1 gleichmäßig und gleichzeitig abgezogen werden können.

Zwischen der Ablösestation 7 und der Schneidestation 17 ist ein Schlaufenbildner, bestehend aus einem ersten Paar von Schlaufenwalzen 32a, 32b und einem zweiten Paar Schlaufenwalzen 33a, 33b, vorgesehen, die separat angetrieben werden. Durch das Stoppen des zweiten Paares Schlaufenwalzen 33a, 33b, bei weiterem Antreiben des ersten Paar Schlaufenwalzen 32a, 32b bildet sich dazwischen eine zunehmende Schlaufe aus Mittelmaterial 3, während die nachfolgende Schneidestation 13 das stillstehende Mittelmaterial 3 schneiden kann. Nach dem Stillstand wird das Paar Schlaufenwalzen 33a, 33b um genau eine Bogenlänge vorwärts angetrieben. bevor der Bogen vom Messer 34 der Schneidestation 17 abgetrennt wird.

Die Kaschierung 2a, 2b wird an den Ablösewalzen 9a, 9b vom Mittelmaterial 3 abgelöst und in einem 90°-Winkel nach oben bzw. unten auseinandergeführt. Die obere und untere Kaschierung 2a, 2b werden dann auf einer oberhalb bzw, unterhalb der Verbundbahn 1 angeordneten Kaschierbobine 16a, 16b aufgewickelt. Der Schneidestation 17 ist ein Transportband für die einzelnen Bögen sowie eine schräg geneigte Bogenablage 35 nachgeordnet, auf der die einzelnen Bögen gestapelt werden.

## Patentansprüche

1. Verfahren zum Ablösen der Kaschierung (2) eines dünnen Verbundmaterials (1) von einem Mittelmaterial (3), insbesondere Papier,
**dadurch gekennzeichnet daß**
das Ablösen im Durchlaufverfahren geschieht indem
- das Verbundmaterial (1) als im wesentlichen endlose Bahn vorliegt,
- das Verbundmaterial (1) als Behandlungsbereich nacheinander einen Anlösebereich und einen Deaktivierungsbereich durchläuft in denen dem Verbundmaterial jeweils Feuchtigkeit zugeführt wird,
- wobei die Verweilzeiten in diesen einzelnen Bereichen unabhängig voneinander steuerbar sind,
- wenigstens am Ende dieser Bereiche jeweils eine Grobentfeuchtung des Verbundmaterials stattfindet,
- nach dem letzten dieser Bereiche das Verbundmaterial (1) einer Trocknung unterworfen wird und
- die Kaschierung (2) von dem Mittelmaterial (3) durch Auseinanderführen gelöst wird.

2. Verfahren nach Anspruch 1,
**dadurch gekennzeichnet, daß**
der Behandlungsbereich nach dem Anlösebereich und dem Deaktivierungsbereich einen Spülbereich aufweist.

3. Verfahren nach einem der vorhergehenden Ansprüche,
**dadurch gekennzeichnet, daß**
- der Anlösebereich bzw. Deaktivierungsbereich bzw. Spülbereich getrennt als flüssigkeitsgefüllte Tauchbereiche ausgebildet sind, oder
- der Anlösebereich bzw. Deaktivierungsbereich bzw Spülbereich als das Verbundmaterials mittels Dampf beaufschlagender Bereiche ausgebildet sind.

4. Verfahren nach Anspruch 3,
**dadurch gekennzeichnet, daß**
der Anlösebereich bzw. Deaktivierungsbereich bzw. Spülbereich jeweils mehrstufig, also durch innerhalb jedes Bereiches voneinander getrennte Räume, ausgebildet ist.

5. Verfahren nach einem der vorstehenden Ansprüche,
**dadurch gekennzeichnet, daß**
wenigstens im Bereich der Endtrocknung eine Krümmung des Verbundmaterials (1) erfolgt, und insbesondere
die Krümmung nacheinander gegenläufige Krümmungen in unterschiedliche Biegerichtungen des Verbundmaterials beinhaltet, und insbesondere die Krümmung des Verbundmaterials eine Krümmung um eine Krümmungsachse (8) quer zur Durchlaufrichtung (10) ist.

6. Verfahren nach einem der vorstehenden Ansprüche,
**dadurch gekennzeichnet, daß**
die Endtrocknung durch Konvektion aufgrund Kontakt mit beheizten, nicht saugenden Flächen erfolgt.

7. Verfahren nach einem der vorstehenden Ansprüche,
**dadurch gekennzeichnet, daß**
das beim Ablösen von zwei auf den Außenseiten des Mittelmaterials (3) vorhandenen Kaschierungen (2a, 2b) das Ablösen gleichzeitig, also an der gleichen Stelle des Durchlaufs, geschieht, indem die Kaschierungen (2a, 2b) in diametrale Richtungen auseinandergeführt und das Mittelmaterial in Durchlaufrichtung weitergeführt wird

8. Verfahren nach einem der vorstehenden Ansprüche,
**dadurch gekennzeichnet, daß**
im Anlösebereich das Verbundmaterial (1) mit einer wäßrigen Lösung, welche 1 bis 5 ‰, insbesondere 2 ‰, Enzyme enthält und eine Temperatur von 50 bis 65°C, insbesondere von 60°C aufweist, in Kontakt gebracht wird.

9. Verfahren nach einem der vorstehenden Ansprüche,
**dadurch gekennzeichnet, daß**
das im Deaktivierungsbereich das Verbundmaterial (1) auf mindestens 70°C, vorzugsweise 70 bis 80°C erwärmt, vorzugsweise durch Inkontaktbringen mittels entsprechend temperierten wäßrigen Lösung, insbesondere der wäßrigen Lösung des Anlösebereiches, gebracht wird.

10. Vorrichtung zum Ablösen der Kaschierung (2) eines dunnen Verbundmaterials (1) von einem Mittelmaterial (3), insbesondere Papierblättern, insbesondere zur Durchführung des Verfahrens nach einem der vorhergehenden Ansprüche,
**dadurch gekennzeichnet, daß**
die Vorrichtung in Durchlaufrichtung (10) nacheinander folgende Komponente umfaßt
- einen Tauchbereich (4) bestehend aus nacheinander geschalteten Tauchbecken (4a, 4b, 4c ...).
- einer Haupttrocknung (6) mit beheizten, gekrummten Heizflächen (12a, 12b, 12c) und
- einer Abziehstation (7) mit einem gegeneinander wirkenden Paar von Ablösewalzen (9a, 9b), über welche Kaschierung (2) einerseits und Mittelmaterial (3) andererseits auseinandergeführt werden.

11. Vorrichtung nach einem der vorstehenden Vorrichtungsansprüche,
**dadurch gekennzeichnet, daß**
im Tauchbereich (4) zum Eintauchen des Verbundmaterials (1) Tauchwalzen (19) vertikal entlang von Taucharmen (40) in die Tauchbecken (4a, 4b, 4c) hineinverlagerbar sind und das bahnförmige Verbundmaterial uber die Unterseite der Tauchwalzen (19) sowie über die Oberseite von oberhalb und außerhalb der Tauchbecken angeordneten Umlenkwalzen (18) geführt ist.

## Claims

1. A method of removing the covering layer (2) of a thin composite material (1) from a central material (3), in particular paper,
**characterised in that** removal is effected in a continuous procedure wherein
- the composite material (1) is in the form of a substantially endless web,
- the composite material (1) passes as a treatment region successively through an initial detachment region and a deactivation region, in each of which moisture is fed to the composite material,
- wherein the residence times in those individual regions are controllable independently of each other,
- at least at the end of each of those regions rough removal of moisture from the composite material takes place,
- after the last of those regions the composite material (1) is subjected to a drying operation, and
- the covering layer (2) is removed from the central material (3) by being moved away from each other.

2. A method according to claim 1 **characterised in that** the treatment region has a flushing region after the initial detachment region and the deactivation region.

3. A method according to one of the preceding claims **characterised in that**
- the initial detachment region and the deactivation region and the flushing region respectively are formed separately in the form of liquid-filled immersion regions, or
- the initial detachment region and the deactivation region and the flushing region respectively are in the form of regions which act on the composite material by means of vapour.

4. A method according to claim 3 **characterised in that** the initial detachment region and the deactivation region and the flushing region respectively are of a multi-stage configuration, that is to say formed by spaces which are separated from each other within each region.

5. A method according to one of the preceding claims **characterised in that**
at least in the region of the final drying operation curvature of the composite material (1) is effected, and in particular
the curvature involves in succession mutually opposite curves in different bending directions of the composite material, and in particular
the curvature of the composite material is a curvature about an axis of curvature (8) transversely with respect to the through-passage direction (10).

6. A method according to one of the preceding claims **characterised in that** the final drying operation is effected by convection on the basis of contact with heated, non-absorbent surfaces.

7. A method according to one of the preceding claims **characterised in that** upon removal of two covering layers (2a, 2b) which are present on the outsides of the central material (3) the removal operation is effected simultaneously, that is to say at the same location of the passage through the apparatus, by a procedure whereby the covering layers (2a, 2b) are moved away from each other in diametral directions and the central material is passed along in the through-passage direction.

8. A method according to one of the preceding claims **characterised in that** in the initial detachment region the composite material (1) is brought into contact with an aqueous solution which contains 1 to 5 ‰, in particular 2 ‰ and is at a temperature of 50 to 65°C, in particular 60°C.

9. A method according to one of the preceding claims **characterised in that** in the deactivation region the composite material (1) is heated to at least 70°C, preferably 70 to 80°C, preferably by being brought into contact by means of suitably temperature-controlled aqueous solution, in particular the aqueous solution of the initial detachment region.

10. Apparatus for removing the covering layer (2) of a thin composite material (1) from a central material (3), in particular sheets of paper, in particular for carrying out the method according to one of the preceding claims,
**characterised in that**
the apparatus in the through-passage direction (10) successively includes the following components
- an immersion region (4) comprising successively connected immersion tanks (4a, 4b, 4c ...),
- a main drying means (6) with heated curved heating surfaces (12a, 12b, 12c), and
- a draw-off station (7) with a mutually oppositely acting pair of removal rollers (9a, 9b), by way of which the covering layer (2) on the one hand and the central material (3) on the other hand are guided away from each other.

11. Apparatus according to one of the preceding apparatus claims
**characterised in that** in the immersion region (4) for immersion of the composite material (1) immersion rollers (19) are displaceable vertically along immersion arms (40) into the immersion tanks (4a, 4b, 4c) and the composite material in web form is passed over the underside of the immersion rollers (19) and over the top side of direction-changing rollers (18) which are arranged above and outside the immersion tanks.

## Revendications

1. Procédé pour le détachement de la doublure (2) d'un matériau composite fin (1) d'un matériau central (3) en particulier du papier,
**caractérisé en ce que**
le détachement s'effectue dans un procédé en continu dans le fait que
- Le matériau composite (1) est sensiblement sous forme de bande sans fin,
- Le matériau composite (1) traverse en tant que zone de traitement l'une après l'autre une zone de mordançage et une zone de désactivation dans lesquelles de l'humidité est ajoutée au matériau composite,
- les temps de séjour dans chacune de ces zones étant commandables indépendamment les uns des autres,
- au moins à l'extrémité de ces zones, il se produit un assèchement grossier du matériau composite,
- après la dernière de ces zones, le matériau composite (1) étant soumis à un séchage et
- la doublure (2) étant détachée du matériau central (3) par séparation.

2. Procédé selon la revendication 1,
**caractérisé en ce que**
la zone de traitement présente après la zone de mordançage et la zone de désactivation une zone de rinçage.

3. Procédé selon l'une des revendications précédentes,
**caractérisé en ce que**
- la zone de mordançage respectivement la zone de désactivation respectivement la zone de rinçage sont réalisées comme des zones d'immersion remplies de liquide, ou
- la zone de mordançage respectivement la zone de désactivation respectivement la zone de rinçage sont réalisées comme des zones appliquant un impact sur le matériau composite par la vapeur.

4. Procédé selon la revendication 3,
**caractérisé en ce que**
la zone de mordançage respectivement la zone de désactivation respectivement la zone de rinçage sont chacune réalisées à plusieurs étages, donc par des cavités séparées les unes des autres à l'intérieur de chaque zone.

5. Procédé selon l'un des revendications précédentes,
**caractérisé en ce qu'**au moins dans la zone du séchage finale, il se produit une courbure du matériau composite (1) et en particulier la courbure contient des courbures opposées les uns après les autres dans différentes directions de flexion du matériau composite et en particulier la courbure du matériau composite est une courbure autour d'un axe de courbure (8) transversalement au sens de défilement (10).

6. Procédé selon l'une des revendications précédentes, **caractérisé en ce que** le séchage final s'effectue par convection en raison du contact avec des surfaces chauffées non aspirantes.

7. Procédé selon l'une des revendications précédentes, **caractérisé en ce que** lors du détachement de deux doublures (2a, 2b) se trouvant sur les faces externes du matériau central (3), le détachement se produit en même temps aussi au même endroit du passage dans le fait que les doublures (2a, 2b) sont guidées en les séparant l'une de l'autre dans des directions diamétralement opposées et le matériau central est guidé dans le sens de défilement.

8. Procédé selon l'une des revendications précédentes, **caractérisé en ce que** dans la zone de mordançage, le matériau composite (1) est amené en contact avec une solution aqueuse qui contient 1 à 5 ‰, en particulier 2 ‰ d'enzymes et présente une température de 50 à 65°C en particulier 60°C.

9. Procédé selon l'une des revendications précédentes, **caractérisé en ce que** dans la zone de désactivation, le matériau composite (1) est chauffé à au moins 70°C de préférence de 70 à 80°C par mise en contact au moyen d'une solution aqueuse stabilisée en température en conséquence en particulier la solution aqueuse de la zone de mordançage.

10. Dispositif pour le détachement de la doublure (2) d'un matériau fin composite (1) d'un matériau central (3), en particulier des feuilles de papier,
en particulier pour la mise en oeuvre du procédé selon l'une des revendications précédentes, **caractérisé en ce que** le dispositif comprend des composants suivants, disposés les uns après les autres dans le sens de défilement (10) :
- une zone d'immersion (4) se composant de bassins d'immersion (4a, 4b, 4c) montés les uns après les autres,
- d'un séchage principal (6) muni de surfaces chauffantes chauffées, courbées (12a, 12b, 12c) et
- un poste de séparation (7) avec une paire de cylindres de détachement (9a, 9b) agissant en opposition réciproque sur lesquels sont séparés la doublure (2) d'une part et le matériau central (3) d'autre part.

11. Dispositif selon l'une des revendications précédentes, **caractérisé en ce que** pour immerger le matériau composite (1) des cylindres d'immersion (19) peuvent être logés dans la zone d'immersion (4) verticalement le long de bras d'immersion (40) dans les bassins d'immersion (4a, 4b, 4c) et le matériau composite en forme de bande est guidé au-dessus de la face inférieure des cylindres d'immersion (19), ainsi qu'au-dessus de la face supérieure de poulies de renvoi (18) disposés au-dessus et en dessous des bassins d'immersion.
